# EUROPÄISCHE PATENTANMELDUNG

(11) **EP 3 788 879 A1**
(43) Veröffentlichungstag der Anmeldung: **10.03.2021**
(21) Anmeldenummer: 20199060.3
(22) Anmeldetag: 30.08.2019
(51) Int. Cl.: A22C 11/02, A22C 7/00, A23P 20/20, A23L 13/60

(54) **PRODUKTIONSLINIE ZUR VEREDELUNG EINES FLEISCHERZEUGNISSES**

(62) Teilanmeldung aus: 19194727.4
(71) Anmelder: Herbert Ospelt Anstalt, 9487 Bendern (LI)
(72) Erfinder: Ospelt, Alexander, 9487 Bendern (LI)
(74) Vertreter: Kaminski Harmann

(57) **Zusammenfassung**

Die Erfindung betrifft weiterhin eine Produktionslinie zur Veredelung eines Fleischerzeugnisses, wobei die Produktionslinie aufweist: eine Vakuumfüllmaschine mit einem Einfülltrichter und einer Drehschieberpumpe, einen Füllstromteiler, eine Rohrleitung, die von der Vakuumfüllmaschine zum Füllstromteiler führt, wobei die Rohrleitung als ein Rohr mit einer Länge ausgeführt ist, die in einem Bereich von zwischen 1 und 5 Metern liegt, insbesondere 2-3 Metern, gewählt ist, und wobei der Füllstromteiler eine Heizeinheit aufweist, die dazu ausgebildet ist, das durch den Füllstromteiler geleitete Fleischerzeugnis auf eine Temperatur zu temperieren, die in einem definierten Temperaturbereich liegt..

## Beschreibung

### GEBIET DER ERFINDUNG

Die vorliegende Erfindung betrifft ein Verfahren zur Herstellung eines geschichteten Nahrungsmittels und eine Produktionslinie zur Veredelung eines Fleischerzeugnisses.

### ZUSAMMENFASSUNG DER ERFINDUNG

Die Erfindung betrifft ein Verfahren zur Herstellung eines geschichteten Nahrungsmittels, welches die folgenden Schritte aufweist:
Wolfen einer Menge rohen Fleischs in einem Fleischwolf zu einem ersten Fleischerzeugnis,
Herstellen eines zweiten Fleischerzeugnisses durch Vermischen des ersten Fleischerzeugnisses mit einer Gewürzzusammensetzung,
Einfüllen des zweiten Fleischerzeugnisses in einen Einfülltrichter einer Vakuumfüllmaschine,
Verdichten des zweiten Fleischerzeugnisses in der Vakuumfüllmaschine,
Befördern des zweiten Fleischerzeugnisses als drittes Fleischerzeugnis zu einem Füllstromteiler unter einem Druck, der von einer Drehschieberpumpe in der Vakuumfüllmaschine bereitgestellt wird,
Aufteilen des dritten Fleischerzeugnisses in mindestens zwei Stränge eines vierten Fleischerzeugnisses im Füllstromteiler,
Ausscheiden der Stränge aus dem Füllstromteiler als fünfte Fleischerzeugnisse, welche jeweils ein rechteckiges Profil aufweisen,
Ablegen der fünften Fleischerzeugnisse auf einem Gitterblech,
Herstellen sechster Fleischerzeugnisse durch Portionieren der fünften Fleischerzeugnisse mit einem Schneidwerkzeug auf eine Länge, die zwischen 50 und 110% der Länge des Gitterblechs entspricht,
Einlagern des die sechsten Fleischerzeugnisse tragenden Gitterblechs in eine Reifekammer,
Bereitstellen einer ersten Temperatur und einer Feuchtigkeit in der Reifekammer, wobei die erste Temperatur in einem ersten definierten Temperaturbereich liegt und wobei die Feuchtigkeit in einem definierten Feuchtigkeitsbereich liegt,
Reifen der sechsten Fleischerzeugnisse zu siebten Fleischerzeugnissen über eine Reifedauer hinweg, die in einem ersten definierten zeitlichen Bereich liegt,
Portionieren der siebten Fleischerzeugnisse in eine Vielzahl quaderförmiger achter Fleischerzeugnisse,
Bereitstellen zweier Backwareneinheiten, wobei jedes der Backwareneinheiten eine Grundfläche aufweist, die zwischen 80 und 120% der Grundfläche eines achten Fleischerzeugnisses entspricht,
eines von:
Herstellen neunter Fleischerzeugnisse durch Applizieren eines Klebers auf den achten Fleischerzeugnissen,
Herstellen zweier beschichteter Backwareneinheiten durch jeweiliges Applizieren eines Klebers auf eine Grundfläche einer Backwareneinheit,
Positionieren eines der achten bzw. neunten Fleischerzeugnisses zwischen den zwei Backwareneinheiten bzw. beschichteten Backwareneinheiten, so dass der Kleber jeweils zwischen einer Backwareneinheit und dem neunten Fleischerzeugnis bzw. zwischen einer beschichteten Backwareneinheit und dem achten Fleischerzeugnis angeordnet ist,
Zusammenpressen der zwei das neunte Fleischerzeugnis umgebenden Backwareneinheiten bzw. der zwei das achte Fleischerzeugnis umgebenden beschichteten Backwareneinheiten mit einer definierten Kraft und für eine Zusammenpressdauer, die in einem zweiten definierten zeitlichen Bereich liegt.

Weiterhin kann das Verfahren den Schritt aufweisen: gewichtsbezogenes Vergleichmässigen des dritten Fleischerzeugnisses im Füllstromteiler.

Das Vergleichmässigen kann basierend auf einer Verwendung einer Paddel-Mischwelle und/oder einer Spiral-Mischwelle erfolgen.

Das Vergleichmässigen kann basierend auf einer Verwendung zumindest einer integrierten Wiegezelle erfolgen.

Weiterhin kann das Verfahren den Schritt aufweisen: Temperieren des dritten Fleischerzeugnisses im Füllstromteiler auf eine zweite Temperatur, die in einem zweiten definierten Temperaturbereich liegt.

Weiterhin kann das Verfahren den Schritt aufweisen: durch Reibung während des Beförderns des dritten Fleischerzeugnisses erzeugtes Aussondern von Proteinen aus dem dritten Fleischerzeugnis.

Weiterhin kann das Verfahren den Schritt aufweisen: Bereitstellen eines Räuchergases in der Reifekammer zumindest während eines Teils der Reifedauer.

Das Applizieren des Klebers kann ein Tunken der achten Fleischerzeugnisse in einem Kleberbad und/oder ein Besprühen und/oder ein Benetzen der achten Fleischerzeugnisse mit einem Klebersprühnebel umfassen.

Der Kleber enthält in einer Ausführungsform Gelatine.

Der Kleber kann weiterhin Genuss-Säure enthalten, insbesondere zusätzlich Konservierungsstoffe.

Der Kleber ist insbesondere frei von Farbstoffen, Aromen, Geschmacksverstärkern und gentechnisch veränderten Lebensmitteln.

Weiterhin kann das Verfahren den Schritt aufweisen: Temperieren des Klebers auf eine dritte Temperatur, die in einem dritten definierten Temperaturbereich liegt.

Die Erfindung betrifft weiterhin eine Produktionslinie zur Veredelung eines Fleischerzeugnisses, wobei die Produktionslinie aufweist:
eine Vakuumfüllmaschine mit einem Einfülltrichter und einer Drehschieberpumpe,
einen Füllstromteiler,
eine Rohrleitung, die von der Vakuumfüllmaschine zum Füllstromteiler führt,
wobei die Rohrleitung als ein Rohr mit einer Länge ausgeführt ist, die in einem Bereich von zwischen 1 und 5 Metern liegt, insbesondere 2-3 Metern, gewählt ist, und wobei der Füllstromteiler eine Heizeinheit aufweist, die dazu ausgebildet ist, das durch den Füllstromteiler geleitete Fleischerzeugnis auf eine Temperatur zu temperieren, die in einem definierten Temperaturbereich liegt.

Der Füllstromteiler weist insbesondere eine Paddel-Mischwelle und/oder eine Spiral-Mischwelle auf.

Der Füllstromteiler weist insbesondere eine integrierte Wiegezelle auf.

### KURZE BESCHREIBUNG DER ZEICHNUNGEN

Weitere Vorteile der vorliegenden Erfindung sind aus der detaillierten Beschreibung und den Zeichnungen ersichtlich.
Figur 1 ist eine Ausführungsform der erfindungsgemässen Produktionslinie;
Figur 2 zeigt fünfte und sechste Fleischerzeugnisse als Zwischenprodukte einer Ausführungsform des erfindungsgemässen Verfahrens;
Figur 3 zeigt sechste und siebte Fleischerzeugnisse als Zwischenprodukte einer Ausführungsform des erfindungsgemässen Verfahrens;
Figur 4 zeigt siebte und achte Fleischerzeugnisse als Zwischenprodukte einer Ausführungsform des erfindungsgemässen Verfahrens;
Figuren 5 und 6 zeigen achte und neunte Fleischerzeugnisse als Zwischenprodukte einer Ausführungsform des erfindungsgemässen Verfahrens;
Figur 7 zeigt Backwareneinheiten und eine beschichtete Backwareneinheit als Zwischenprodukte einer Ausführungsform des erfindungsgemässen Verfahrens;
Figur 8 zeigt die Herstellung des geschichteten Nahrungsmittels und das geschichtete Nahrungsmittel selbst;

### DETAILLIERTE BESCHREIBUNG DER ZEICHNUNGEN

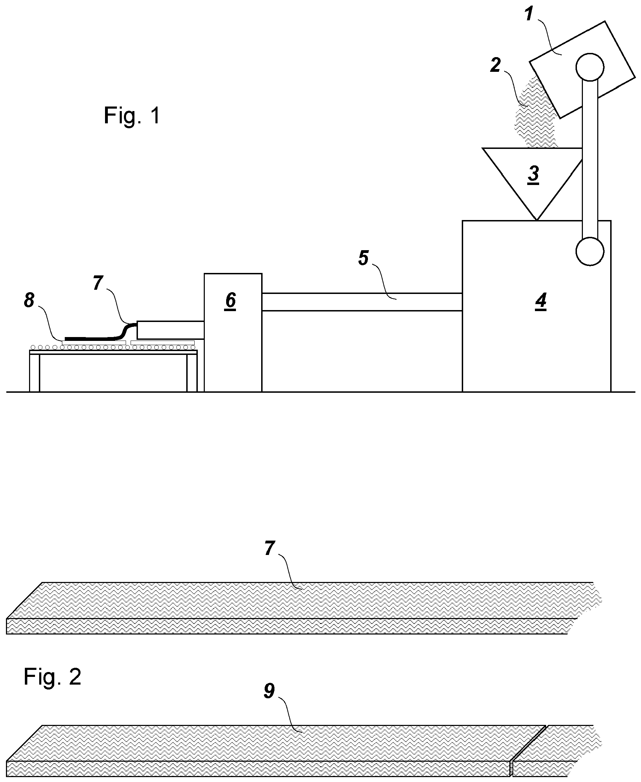

Figur 1 zeigt eine Ausführungsform der erfindungsgemässen Produktionslinie, anhand derer einige Schritte des erfindungsgemässen Verfahrens im Folgenden erläutert werden.

Über einen Behälter 1 wird eine Menge zweiten Fleischerzeugnisses 2 in den Einfülltrichter 3 der Vakuumfüllmaschine 4 eingefüllt. Das zweite Fleischerzeugnis 2 ist insbesondere Brät, welches zuvor aus einem ersten Fleischerzeugnis und einer Gewürzzusammensetzung entsteht (jeweils nicht dargestellt). Das erste Fleischerzeugnis ist zerkleinertes (gewolftes) rohes Fleisch von zulässigen Tierarten nach Art. 2 Verordnung des Eidgenössischen Departements des Innern (EDI) über Lebensmittel tierischer Herkunft (VLtH), insbesondere Schweinespeck, Schweinefleisch und/oder Rindfleisch (nicht dargestellt). Die Gewürzzusammensetzung kann auch technische Hilfsstoffe beinhalten.

Das zweite Fleischerzeugnis 2 wird in der Vakuumfüllmaschine 4 durch eine Drehschieberpumpe (nicht dargestellt) verdichtet und in eine Rohrleitung 5 befördert, über welche es an einen Füllstromteiler 6 gelangt. Die Rohrleitung 5 ist insbesondere derart lang, dass dort Proteinausscheidungsprozesse stattfinden. Die dadurch entstehende Schmierwirkung ist normalerweise unerwünscht, da sie zu Verklebungen und damit zu Prozessunterbrechungen führen kann. Die erfinderische Prozesslinie und ein Aspekt des erfinderischen Verfahrens jedoch machen sich diesen Effekt bewusst zu Nutze. Verklebungen können verhindert werden, indem der Füllstromteiler 6 insbesondere eine Heizeinheit aufweist, mit der das dritte Fleischerzeugnis auf einem bestimmten Temperaturniveau gehalten wird und die Masse somit geschmeidig bleibt und nicht verklebt. Dazu hat die Rohrleitung 5 bevorzugt eine Länge von etwa ein bis fünf Metern, insbesondere zwei bis drei Metern, insbesondere ungefähr drei Metern.

Der Füllstromteiler 6 teilt das dritte Fleischerzeugnis auf in mindestens zwei, insbesondere fünf bis zehn, im Speziellen acht Teilstränge, im Folgenden vierte Fleischerzeugnisse 7 genannt. Im Inneren des Füllstromteilers 6 werden die Teilstränge vergleichmässigt, wobei dies insbesondere auf einer Gewichtsdetektion und/oder auf einer Volumendetektion erfolgen kann. Hierzu können sogenannte Paddel- und/oder Spiral-Mischwellen, bzw. Wiegezellen eingesetzt werden.

Die vierten Fleischerzeugnisse wurden durch eine Matrize mit rechteckigem Profil aus dem Füllstromteiler 6 als fünfte Fleischerzeugnisse 7 auf einem Gitterblech 8 abgelegt, welches auf einem Rollband mit der Ausflussgeschwindigkeit des fünften Fleischerzeugnisses 7 Schritthalten kann. Das Gitterblech 8 kann, muss aber nicht, vor dem Belegen eingefettet werden, dies etwa mit einem Sprühnebel aus Antihaftmittel. Speziell ist, dass das fünfte Fleischerzeugnis 7 nicht in eine Umhüllung (z.B. Naturdarm) gegeben wird. Das Gitterblech 8 weist insbesondere eine spezielle Maschung des Gitters auf, welche dafür sorgt, dass möglichst wenig Auflagefläche besteht und dennoch die Form der noch weichen fünften Fleischerzeugnisse 7 erhalten bleibt.

Figur 2 zeigt, dass das fünfte Fleischerzeugnis 7 auf Länge geschnitten wird, d.h. quer zur Ausflussrichtung. Insbesondere kann dies durch ein entsprechend langes Schneidemittel für alle Stränge gleichzeitig erfolgen, womit auch sichergestellt wird, dass alle Stränge die gleiche Länge haben. Die nun auf Länge geschnittenen, quaderförmigen Stränge werden im Folgenden sechste Fleischerzeugnisse 9 genannt.

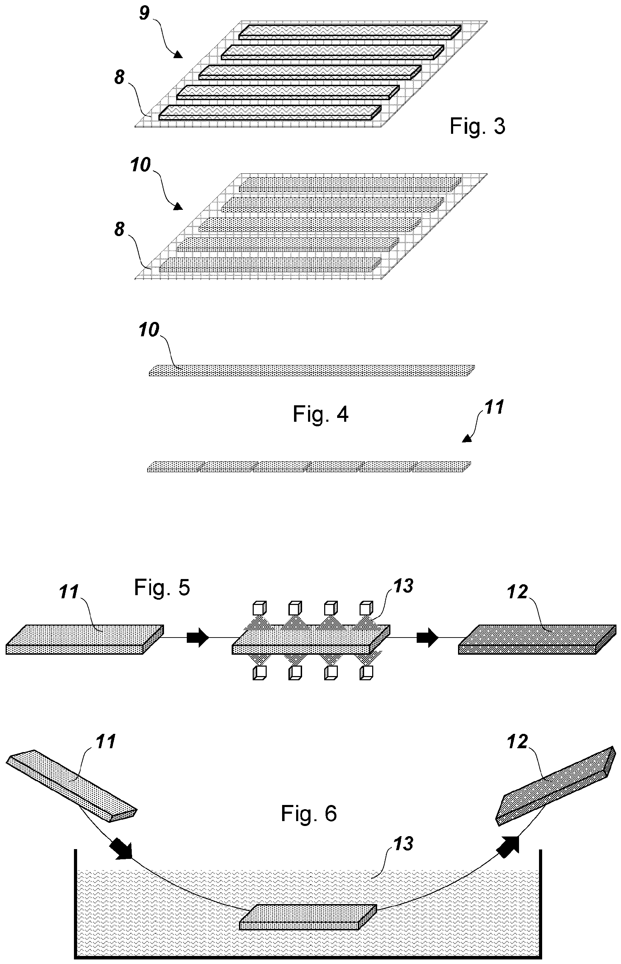

Das Verhältnis aus Blechgrösse und Schnittlänge ist so gewählt, dass das Gitterblech 8 gut ausgenutzt wird, aber dennoch ein Sicherheitsabstand zum Rand des Gitterblechs 8, siehe Figur 3. Das derartig beladene Gitterblech 8 wird nun in eine Reifekammer gegeben, in welcher die sechsten Fleischerzeugnisse 9 getrocknet bzw. gereift werden können. Bei speziell eingestellter Temperatur und Luftfeuchtigkeit, bzw. Temperatur- und/oder Luftfeuchtigkeits-Verläufen, reifen die sechsten Fleischerzeugnisse 9 zu siebten Fleischerzeugnissen 10. Die sechsten Fleischerzeugnisse 9 haben auf dem Blech 8 auch einen speziell definierten Querabstand voneinander, der bevorzugt für den Reifeprozess berücksichtigt wird. Der Reifeprozess dauert in etwa zwei bis fünf Tage, insbesondere drei bis vier Tage. Ähnliches gilt für die Dimensionen des rechteckigen Profils der sechsten Fleischerzeugnisse 9. In einer Ausführungsform können die Fleischerzeugnisse in der Reifekammer oder in einer Räucherkammer auch Rauch ausgesetzt werden.

Sind die sechsten Fleischerzeugnisse 9 zu siebten Fleischerzeugnissen 10 gereift, werden sie in gleichgrosse Quader geschnitten, siehe Figur 4. Diese Zuschnitte werden im Folgenden achte Fleischerzeugnisse 11 genannt. Selbstverständlich wird die Wahl der Grösse des Gitterblechs 8 und der Schnittlänge der sechsten Fleischerzeugnisse 9 bereits derart gewählt, dass beim Zuschnitt der siebten Fleischerzeugnissen 10 zu achten Fleischerzeugnissen 11 möglichst wenig Reste übrigbleiben. Hierbei wird auch die durch Wasserentzug bewirkte Schrumpfung beim Reifeprozess berücksichtigt. Die Quader der achten Fleischerzeugnisse 11 haben etwa eine Grundfläche im Bereich zwischen 10x5 cm bis 8x3 cm, insbesondere 9x4 cm. Die Dicke beträgt etwa 2 bis 10 mm, insbesondere etwa 5 mm. Das Gewicht beträgt etwa 20 bis 40 Gramm, insbesondere 30 Gramm.

Um das Fleischerzeugnis zwischen zwei Backwareneinheiten, insbesondere Brotscheiben, zu befestigen, wird ein Kleber eingesetzt. Dieser kann initial am Fleischerzeugnis oder an den Backwareneinheiten angebracht werden. Der Kleber 13 enthält bevorzugt kollagenes Eiweiss, d.h. Gelatine, insbesondere zusätzlich einen Anteil von Genuss-Säuren (insbesondere weiterhin zusätzlich Konservierungsstoffe), welches die geschmacklichen Eigenschaften, die Stabilität des Klebers und die Haltbarkeit nochmals verbessert. Ein Effekt des Klebers ist, dass die Fleischerzeugnisse eine glänzende Oberfläche erhalten, wodurch die Ästhetik des Produkts verbessert wird. Der Kleber 13 wird insbesondere durch eine Temperierung auf etwa 50 bis 80°C, insbesondere 60 bis 70°C, in einem flüssigen Aggregatzustand gehalten, wobei ein Abfallen der Temperatur auf Raumtemperatur dazu führt, dass der Kleber 13 erstarrt. Die Applikation des Klebers dauert insbesondere etwa 1.5 bis 3 Sekunden, damit sich die jeweilige Oberfläche gut mit dem Kleber verbinden kann.

Figuren 5 und 6 zeigen jeweils Beschichtungsprozesse, die alternativ oder supplementär angewendet werden können. Figur 5 zeigt, wie eines der achten Fleischerzeugnisse 11 durch einen anhand jeweiliger Düsen erzeugten Sprühnebel befördert werden. Diese Zeichnung ist als Abstraktion zu verstehen. Dem Fachmann sind diverse Möglichkeiten bekannt, eine voll umfängliche Beschichtung vorzunehmen. Insbesondere sind die Düsen derart angeordnet, dass selbstverständlich alle Seiten des Quaders beschichtet werden. Es resultieren beschichtete Fleischerzeugnisse, im Folgenden neunte Fleischerzeugnisse 12 genannt. Figur 6 zeigt ein Kleberbad, in welches die achten Fleischerzeugnisse 11 vollständig eingetunkt werden. Der Sprühnebel aus Figur 5 und das Bad aus Figur 6 enthalten jeweils den Kleber 13. Auch hierdurch entstehen die beschichteten neunten Fleischerzeugnisse 12.

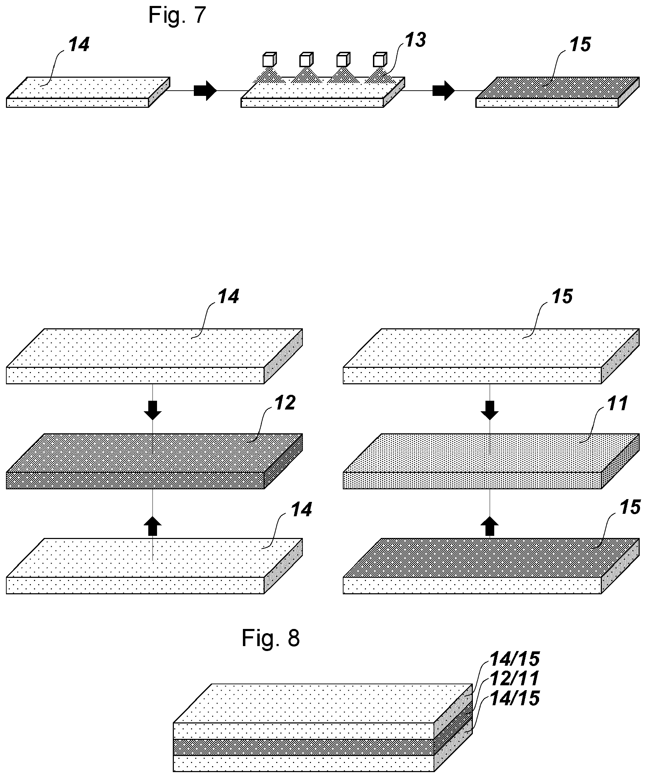

Als Alternative zu den mit den Figuren 5 und 6 erläuterten Vorgängen zeigt Figur 7 eine Beschichtung einer Grundfläche der Backwareneinheiten 14 mit Kleber. Hierbei durchlaufen die Backwareneinheiten 14 einen einseitigen Sprühnebel aus Kleber 13 und werden zu beschichteten Backwareneinheiten 15.

Ungeachtet des Ortes der Kleberapplikation wird, noch während die Kleberschicht an den neunten Fleischerzeugnissen 12 bzw. an den beschichteten Backwareneinheiten 15 flüssig ist, ein neuntes Fleischerzeugnis 12 bzw. ein achtes Fleischerzeugnis 11 bündig zwischen zwei Backwareneinheiten 14 bzw. beschichteten Backwareneinheiten 15 gelegt, wobei die drei Schichten dann zusammengepresst werden, siehe Figur 8. Kurz darauf erstarrt der Kleber und verbindet somit die beiden Backwareneinheiten fest mit dem Fleischerzeugnis. Insbesondere ist es für optimale Ergebnisse vorgesehen, die Schichten drei bis sechs Sekunden lang zusammenzupressen. Die Backwareneinheiten haben insbesondere eine Höhe von etwa 2 bis 10 mm, insbesondere 6 mm.

Das Fleischerzeugnis hat, zumindest im Vergleich zu den Backwareneinheiten, eine sehr glatte Oberfläche, auf der der Kleber gut anhaften kann. Damit der Kleber aber auch besser auf den Backwareneinheiten hält, kann hierfür eine spezielle Rezeptur vorgesehen sein. So ist es vorteilhaft, einen erhöhten Fettanteil für die Backware zu verwenden, insbesondere einen Anteil von 30 bis 50 % vom Mehlanteil. Dies erhöht die Mürbigkeit, d.h. die Feuchtigkeit und Zartheit der Backware. Eine weitere besondere Möglichkeit, die Kleberanhaftung zu verbessern besteht darin, ein Kochstück zu verwenden, das durch eine Mehlschwitze hergestellt und dann dem Teig zugefügt wird. Hierdurch wird die Feuchtigkeit konserviert und eine Saftigkeit der Backware gewährleistet. All diese Massnahmen sind für das Backen von Brot eher ungewöhnlich - für das erfinderische Verfahren sind sie jedoch von Vorteil. Weiterhin kann es vorteilhaft für die Kleberanhaftung sein, die Backwareneinheiten aus einer grossen Backwarenplatte mit einer präzisen und scharfen Säge auszuschneiden, wobei die Grundfläche, die den Kleber empfängt, von allfälligen Krümeln und Staub zu befreien ist.

Die Erfindung betrifft auch folgende Gegenstände:
Gegenstand 1: Ein Verfahren zur Herstellung eines geschichteten Nahrungsmittels, welches die folgenden Schritte aufweist:
   Wolfen einer Menge rohen Fleischs in einem Fleischwolf zu einem ersten Fleischerzeugnis,
   Herstellen eines zweiten Fleischerzeugnisses (2) durch Vermischen des ersten Fleischerzeugnisses mit einer Gewürzzusammensetzung,
   Einfüllen des zweiten Fleischerzeugnisses (2) in einen Einfülltrichter (3) einer Vakuumfüllmaschine (4),
   Verdichten des zweiten Fleischerzeugnisses (2) in der Vakuumfüllmaschine (4),
   Befördern des zweiten Fleischerzeugnisses (2) als drittes Fleischerzeugnis zu einem Füllstromteiler (6) unter einem Druck, der von einer Drehschieberpumpe in der Vakuumfüllmaschine (4) bereitgestellt wird,
   Aufteilen des dritten Fleischerzeugnisses in mindestens zwei Stränge eines vierten Fleischerzeugnisses im Füllstromteiler (6),
   Ausscheiden der Stränge aus dem Füllstromteiler als fünfte Fleischerzeugnisse (7), welche jeweils ein rechteckiges Profil aufweisen,
   Ablegen der fünften Fleischerzeugnisse (7) auf einem Gitterblech (8),
   Herstellen sechster Fleischerzeugnisse (9) durch Portionieren der fünften Fleischerzeugnisse (7) mit einem Schneidwerkzeug auf eine Länge, die zwischen 50 und 110% der Länge des Gitterblechs (8) entspricht,
   Einlagern des die sechsten Fleischerzeugnisse (9) tragenden Gitterblechs (8) in eine Reifekammer,
   Bereitstellen einer ersten Temperatur und einer Feuchtigkeit in der Reifekammer, wobei die erste Temperatur in einem ersten definierten Temperaturbereich liegt und wobei die Feuchtigkeit in einem definierten Feuchtigkeitsbereich liegt,
   Reifen der sechsten Fleischerzeugnisse (9) zu siebten Fleischerzeugnissen (10) über eine Reifedauer hinweg, die in einem ersten definierten zeitlichen Bereich liegt,
   Portionieren der siebten Fleischerzeugnisse (10) in eine Vielzahl quaderförmiger achter Fleischerzeugnisse (11),
   Bereitstellen zweier Backwareneinheiten (14), wobei jedes der Backwareneinheiten (14) eine Grundfläche aufweist, die zwischen 80 und 120% der Grundfläche eines achten Fleischerzeugnisses (11) entspricht,
   eines von:
   Herstellen neunter Fleischerzeugnisse (12) durch Applizieren eines Klebers (13) auf den achten Fleischerzeugnissen (11),
   Herstellen zweier beschichteter Backwareneinheiten (15) durch jeweiliges Applizieren eines Klebers (13) auf eine Grundfläche einer Backwareneinheit (14),
   Positionieren eines der achten (11) bzw. neunten (12) Fleischerzeugnisses zwischen den zwei Backwareneinheiten (14) bzw. beschichteten Backwareneinheiten (15), so dass der Kleber (13) jeweils zwischen einer Backwareneinheit (14) und dem neunten Fleischerzeugnis (12) bzw. zwischen einer beschichteten Backwareneinheit (15) und dem achten Fleischerzeugnis (11) angeordnet ist,
   Zusammenpressen der zwei das neunte Fleischerzeugnis (12) umgebenden Backwareneinheiten (14) bzw. der zwei das achte Fleischerzeugnis (11) umgebenden beschichteten Backwareneinheiten (15) mit einer definierten Kraft und für eine Zusammenpressdauer, die in einem zweiten definierten zeitlichen Bereich liegt.
Gegenstand 2: Das Verfahren gemäss Gegenstand 1, weiterhin aufweisend den Schritt:
   gewichtsbezogenes Vergleichmässigen des dritten Fleischerzeugnisses im Füllstromteiler.
Gegenstand 3: Das Verfahren gemäss Gegenstand 2, wobei das Vergleichmässigen basierend auf einer Verwendung einer Paddel-Mischwelle und/oder einer Spiral-Mischwelle erfolgt.
Gegenstand 4: Das Verfahren gemäss Gegenstand 2 oder 3, wobei das Vergleichmässigen basierend auf einer Verwendung zumindest einer integrierten Wiegezelle erfolgt.
Gegenstand 5: Das Verfahren gemäss einem der vorhergehenden Gegenstände, weiterhin aufweisend den Schritt:
   Temperieren des dritten Fleischerzeugnisses im Füllstromteiler auf eine zweite Temperatur, die in einem zweiten definierten Temperaturbereich liegt.
Gegenstand 6: Das Verfahren gemäss einem der vorhergehenden Gegenstände, weiterhin aufweisend den Schritt:
   durch Reibung während des Beförderns des dritten Fleischerzeugnisses erzeugtes Aussondern von Proteinen aus dem dritten Fleischerzeugnis.
Gegenstand 7: Das Verfahren gemäss einem der vorhergehenden Gegenstände, weiterhin aufweisend den Schritt:
   Bereitstellen eines Räuchergases in der Reifekammer zumindest während eines Teils der Reifedauer.
Gegenstand 8: Das Verfahren gemäss einem der vorhergehenden Gegenstände, wobei das Applizieren des Klebers ein Tunken der achten Fleischerzeugnisse in einem Kleberbad und/oder ein Besprühen und/oder ein Benetzen der achten Fleischerzeugnisse mit einem Klebersprühnebel umfasst.
Gegenstand 9: Das Verfahren gemäss einem der vorhergehenden Gegenstände, wobei der Kleber Gelatine enthält.
Gegenstand 10: Das Verfahren gemäss Gegenstände 9, wobei der Kleber Genuss-Säure enthält, insbesondere zusätzlich Konservierungsstoffe.
Gegenstand 11: Das Verfahren gemäss einem der vorhergehenden Gegenstände, wobei der Kleber frei von Farbstoffen, Aromen, Geschmacksverstärkern und gentechnisch veränderten Lebensmitteln ist.
Gegenstand 12: Das Verfahren gemäss einem der vorhergehenden Gegenstände, weiterhin aufweisend den Schritt:

Temperieren des Klebers auf eine dritte Temperatur, die in einem dritten definierten Temperaturbereich liegt.

Die Erfindung wurde zwar anhand ihrer bevorzugten Ausführungsform(en) erläutert, doch es können viele weitere Änderungen und Variationen vorgenommen werden, ohne über den Umfang der vorliegenden Erfindung hinauszugehen. Daher ist es vorgesehen, dass die beiliegenden Patentansprüche Änderungen und Variationen abdecken, die im tatsächlichen Umfang der Erfindung enthalten sind.

## Patentansprüche

1. Eine Produktionslinie zur Veredelung eines Fleischerzeugnisses (2), wobei die Produktionslinie aufweist:
- eine Vakuumfüllmaschine (4) mit einem Einfülltrichter (3) und einer Drehschieberpumpe,
- einen Füllstromteiler (6),
- eine Rohrleitung (5), die von der Vakuumfüllmaschine zum Füllstromteiler führt,
**dadurch gekennzeichnet, dass**
- die Rohrleitung als ein Rohr mit einer Länge ausgeführt ist, die in einem Bereich von zwischen 1 und 5 Metern liegt, insbesondere 2-3 Metern, gewählt ist, und
- der Füllstromteiler eine Heizeinheit aufweist, die dazu ausgebildet ist, das durch den Füllstromteiler geleitete Fleischerzeugnis auf eine Temperatur zu temperieren, die in einem definierten Temperaturbereich liegt.

2. Die Produktionslinie gemäss Anspruch 1, wobei der Füllstromteiler (6) eine Paddel-Mischwelle und/oder eine Spiral-Mischwelle aufweist.

3. Die Produktionslinie gemäss Anspruch 1 oder 2, wobei der Füllstromteiler (6) eine integrierte Wiegezelle aufweist.
